## Europäisches Patentamt

### European Patent Office

### Office européen des brevets

(19)

(11) Numéro de publication: **0 165 142**
**B1**

(12)

# FASCICULE DE BREVET EUROPÉEN

(45) Date de publication du fascicule du brevet:
**17.01.90**

(21) Numéro de dépôt: **85400973.5**

(22) Date de dépôt: **17.05.85**

(51) Int. Cl. ⁴: **B 23 B 29/04,** B 23 B 31/06

(54) **Dispositif de blocage et de déblocage de cassettes outils sur un porte-outil.**

(30) Priorité: **17.05.84 FR 8407671**

(43) Date de publication de la demande:
**18.12.85 Bulletin 85/51**

(45) Mention de la délivrance du brevet:
**17.01.90 Bulletin 90/03**

(84) Etats contractants désignés:
**AT BE CH DE GB IT LI SE**

(56) Documents cité:
**FR-A-2 467 052**
**US-A-2 407 471**

(73) Titulaire: **BERTHIEZ S.A.**
**5, rue Barrouin**
**F-42000 Saint-Etienne (FR)**

(72) Inventeur: **Roux, Jean Pierre**
**63, rue Bergson**
**F-42000 - Saint Etienne (FR)**

(74) Mandataire: **Hoisnard, Jean-Claude**
**Cabinet Beau de Lomenie 55, rue d'Amsterdam**
**F-75008 Paris (FR)**

## Description

La présente invention a pour objet un dispositif de blocage et de déblocage de cassettes-outils sur un porte-outil.

Pour procéder au changement d'un outil sur les tours verticaux, il est nécessaire actuellement de démonter de façon automatique un porte-outil pesant plusieurs dizaines de kilogrammes et présentant des dimensions importantes. Toutefois, il est également connu suivant une technique plus récente d'utiliser un porte-outil qui reste fixé sur la machine et qui reçoit des cassettes-outils dont les dimensions sont nettement inférieures à celles du porte-outil et qui peuvent être remplacées plus aisément.

Cette disposition permet pour un même volume du changeur d'outil de disposer d'un nombre d'arêtes de coupe très important. Cependant cette solution pose de très nombreux problèmes en ce qui concerne sa réalisation notamment en ce qui concerne le blocage de chaque cassette-outil sur le porte-outil.

En effet, il est nécessaire d'avoir une source d'énergie sur le porte-outil pour commander le blocage et le déblocage des cassettes-outils sur le porte-outil et ladite source d'énergie peut être, soit intégrée, au porte-outil, soit extérieure à celui-ci.

Par ailleurs, il est nécessaire de monter plusieurs cassettes-outils sur le même porte-outil.

La présente invention a pour but de réaliser un dispositif permettant de résoudre ces problèmes.

Dans l'invention, le dispositif de blocage et de déblocage de cassettes-outils sur un porte-outil monté sur un coulisseau ou coulant de machine-outil présente une constitution commune avec le dispositif connu précité. Ainsi, le porte-outil est susceptible d'être fixé sur le coulant par l'intermédiaire d'un moyen de calage angulaire, tel que des crantages, et d'un moyen de serrage, tandis que les cassettes sont disposées dans des alvéoles du porte-outil comportant à leur partie supérieure un premier piston de commande de blocage et de déblocage de la cassette-outil, une broche étant en outre montée tournante et immobilisée en translation dans le coulant, ces caractéristiques ressortant de l'art antérieur connu.

La présente invention propose en plus des moyens originaux et réside en ce que:

– un organe de transmission est prisonnier du porte-outil tout en étant libre de se mouvoir en translation de course limitée et en rotation relativement à ce porte-outil, cet organe de transmission attelé audit porte-outil étant susceptible d'être logé dans la broche, en étant relié à cette broche par l'intermédiaire d'un accouplement coulissant,

– un moyen de commande s'étendant coaxialement dans la broche est disposé en regard de l'organe de transmission, lequel est muni d'un pion ou poussoir fixe d'actionnement s'étendant parallèlement à l'axe dudit organe de transmission,

– le porte-outil fixe comporte, d'une façon connue en soi, autant de circuits hydrauliques fermés de commande que ce porte-outil est équipé de cassettes-outils, chaque circuit reliant le cylindre du premier piston au cylindre d'un deuxième piston,

– les cylindres du porte-outil débouchent en regard de l'organe de transmission à la même distance de son axe que le pion ou poussoir fixé audit organe, de façon que ledit poussoir puisse actionner, par translation axiale dudit organe, le deuxième piston sélectionné par rotation de celui-ci.

Le brevet FR-A-2 467 052 décrit une transmission hydraulique entre un vérin hydraulique logé dans un support fixe sur lequel est montée tournante une tourelle munie d'outils fixes et d'outils interchangeables. Pour chaque outil interchangeable, la tourelle présente un piston de verrouillage de l'outil, coopérant avec un ressort. Le cylindre dans lequel se meut ce premier piston communique par un conduit avec un autre cylindre dans lequel se meut un deuxième piston qui est situé, s'il est sélectionné par rotation de la tourelle, en regard d'un poussoir du vérin hydraulique du support fixe. Les cylindres et le conduit sont remplis de fluide hydraulique.

Dans ce brevet français, il faut bouger le porte-outil (rotation de la tourelle) pour changer d'outil alors que dans la présente invention, au moins une arête de coupe peut être interchangée sans bouger le porte-outil qui reste fixé au coulant. Les temps morts se trouvent alors réduits.

Dans ledit brevet français, un outil seulement peut être actif, alors que dans la présente invention deux outils ou davantage peuvent être actifs; en effet, l'actionneur est sur ce qui tourne et les cassettes sur ce qui est fixe.

D'autres inconvénients de ce dispositif connu appartenant à un secteur technique différent pourraient être dégagés. Mais cela n'est pas utile, puisque les moyens du FR-A-2 467 052 se retrouvant dans la présente invention sont adaptés et combinés à de nombreux autres pour parvenir à un résultat différent.

Suivant une forme de réalisation particulièrement avantageuse, l'organe de transmission est constitué par une fausse queue conique dont l'extrémité libre est susceptible de venir en contact avec une tige de commande montée coulissante dans la broche tournante du coulant.

L'organe de transmission présente en regard du porte-outil des logements dans lesquels sont montés coulissants des pistons d'appui appliqués contre le porte-outil par des organes élastiques.

D'autres avantages de l'invention seront mieux compris à la lecture qui va suivre de plusieurs modes de réalisation et en se référant aux dessins annexés, sur lesquels:

– la figure 1 est une vue en coupe longitudinale d'un porte-outil sur lequel est monté un dispositif de blocage et de déblocage de cassettes-outils suivant l'invention, ce dispositif étant en position d'attente,
- la figure 2 est une vue analogue à la figure 1 du dispositif en position de fonctionnement pour le déblocage d'une cassette,
- la figure 3 est une vue en coupe suivant la ligne III - III de la figure 1,
- la figure 4 est une vue en coupe suivant la ligne IV - IV de la figure 1,
- la figure 5 est une vue en coupe suivant la ligne V - V de la figure 1,
- la figure 6 est une vue en coupe suivant la ligne VI - VI de la figure 5,
- la figure 7 est une vue en coupe longitudinale d'un autre mode de réalisation du moyen de commande,
- la figure 8 est une vue en coupe d'une variante de réalisation du montage du piston et de son ressort.

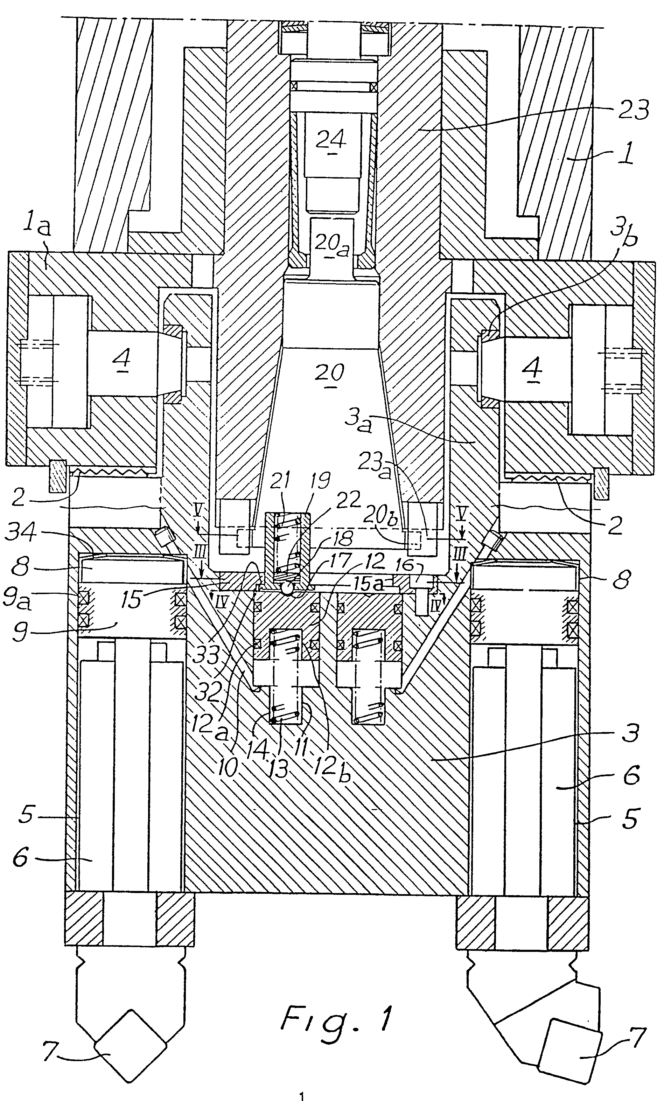

A la figure 1, on a représenté la partie inférieure d'un corps 1 d'un coulant de machine-outil, lequel coulant étant disposé verticalement mais pouvant occuper toute autre position.

Sur l'embase du corps 1 du coulant sont prévues des stries ou organes de crantage 2 dans lesquels sont engagés des stries ou organes de crantage correspondants prévus sur la face supérieure d'un porte-outil de tournage 3 qui est prolongé par une couronne 3a présentant des logements 3b dans lesquels sont engagés des organes de fixation 4 montés coulissants dans l'embase 1a du corps 1.

Le porte-outil 3 présente deux alvéoles 5 dans lesquels sont montées deux cassettes-outils 6 présentant à leur base un organe de coupe 7.

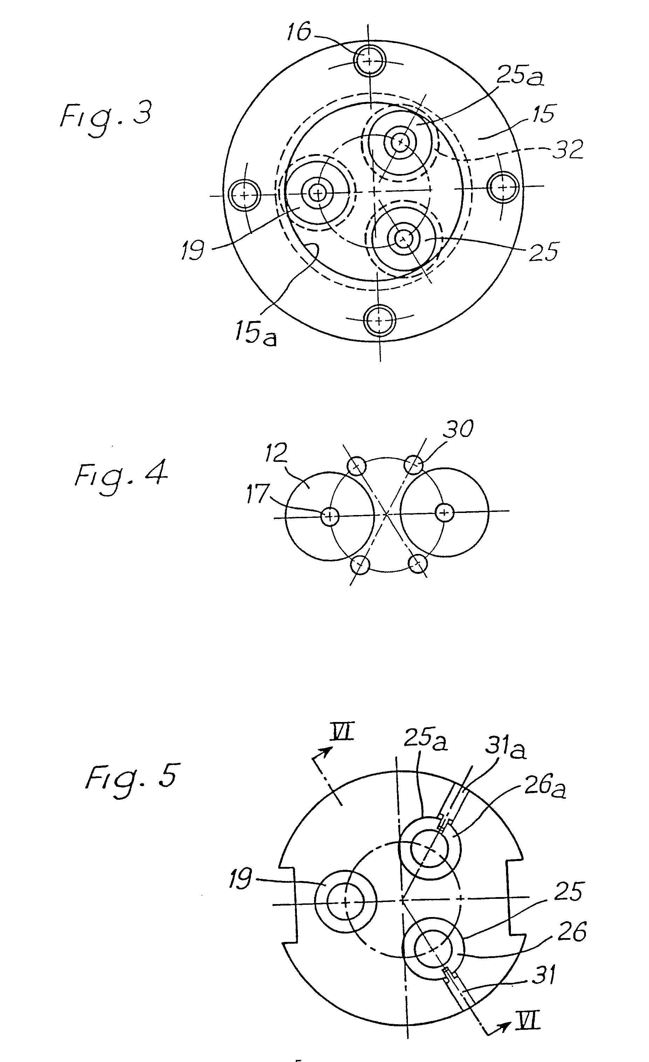

A la partie supérieure de chaque alvéole 5 est prévue une chambre hydraulique 8 qui est délimitée par le fond de l'alvéole 5 et par un premier piston 9 monté coulissant dans ledit alvéole et assurant le blocage et le déblocage de la cassette-outil 6, ledit piston étant muni d'organes d'étanchéité 9a. Chacune des chambres 8 est reliée par un conduit 10 à la base d'un cylindre 11 dans lequel est monté coulissant un second piston 12 muni d'organes d'étanchéité 12a. Le piston 12 est soumis à l'action d'un ressort hélicoïdal 13 engagé d'un côté dans un logement 14 prolongeant le cylindre 11 et de l'autre côté dans un logement 12b du piston 12, ledit ressort 13 repoussant le piston 12 contre un bord d'une plaque annulaire 15 (figures 1 et 3) fixée à la partie supérieure du porte-outil 3 au moyen de vis 16.

Les pistons 12 présentent chacun une empreinte 17 dans laquelle est susceptible d'être engagée sélectivement une bille 18 d'un pion 19 fixée à la base d'un organe conique de transmission 20, ladite bille étant repoussée contre le piston 12 sous l'action d'un ressort 21, avec interposition d'une plaquette 22.

L'organe conique de transmission 20, est monté coulissant dans un bloc tournant 23 qui correspond notamment à la broche de fraisage installée sur la machine, ledit bloc tournant 23 étant monté rotatif dans le corps 1 du coulant.

Dans le bloc tournant 23, est montée coulissante une tige 24 qui agit sur l'extrémité supérieure 20a de l'organe de transmission 20 et qui est reliée à des moyens de commande utilisés normalement pour le déblocage des porte-outils de fraisage.

A la base, le bloc tournant 23 présente des doigts 23a qui sont engagés dans des ouvertures correspondantes 20a ménagées à la partie inférieure de l'organe de transmission 20 afin d'entraîner celui-ci en rotation et de le guider axialement.

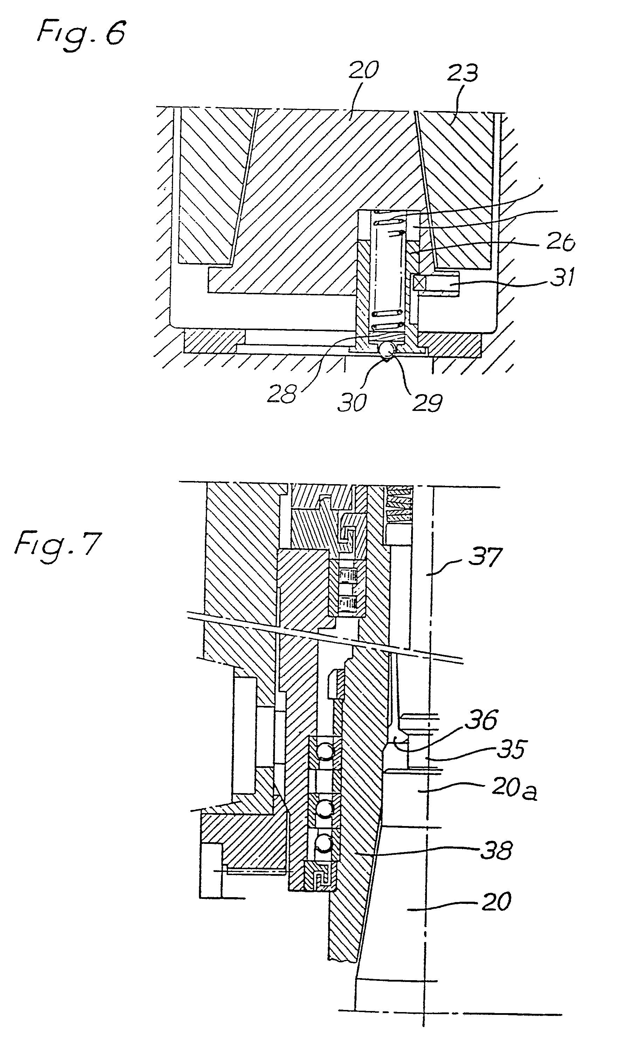

Dans l'organe de transmission 20, sont également prévus deux logements cylindriques 25, 25a (figures 5 et 6) dans lesquels sont montés coulissants des pistons 26, 26a soumis à l'action de ressorts 27 en appui contre le fond des logements 25, 25a et contre une plaquette 28 qui agit sur une bille 29 engagée dans l'une des empreintes 30 prévues à la partie supérieure du porte-outil 3 (figures 4, 5 et 6). Les pistons 26, 26a sont guidés axialement par des clavettes 31, 31a solidaires de l'organe de transmission 20 et ils présentent, comme le pion 19, un rebord 32 qui est en appui contre un épaulement 33 de la plaque annulaire 15.

Les pistons 25, 25a assurent la stabilité de l'organe conique de transmission 20 lorsque le porte-outil 3 n'est plus en place sur la machine.

Dans le fond de chaque chambre 8 (figure 1), il est prévu un ressort 34 contre lequel est susceptible de venir en appui le piston 12 lorsque le dispositif est à l'état de repos et que la source d'énergie est supprimée.

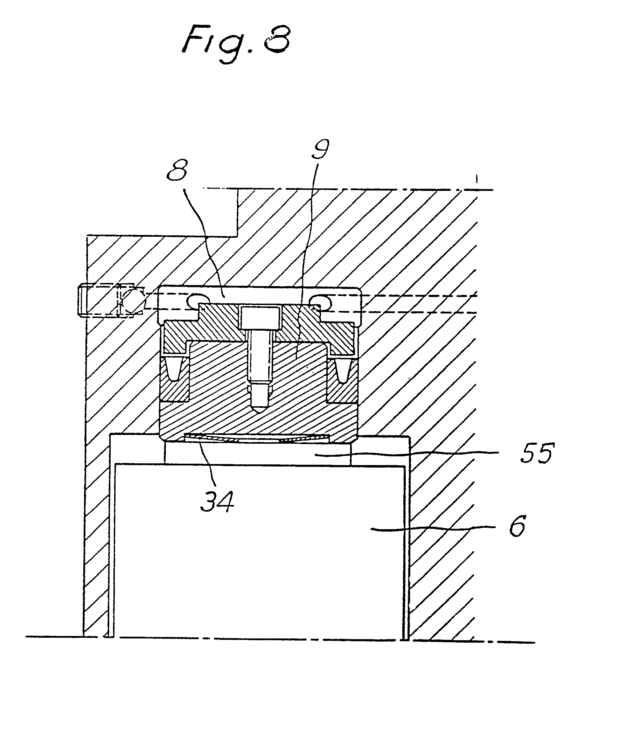

Suivant un autre mode de réalisation représenté à la figure 8, le ressort 34 en forme de rondelle est disposé entre le piston 9 et une tige de commande 55 pour le déblocage de la cassette porte-outil 6.

Le dispositif suivant l'invention fonctionne de la manière suivante.

L'organe de transmission 20 se trouvant dans la position représentée à la figure 1, si on veut procéder au déblocage d'une cassette 6 qui se trouve alors en position bloquée, on entraîne en rotation le bloc tournant 23 et par suite l'organe de transmission 20, afin d'amener le pion 19 au-dessus du piston 12 correspondant à la cassette sélectionnée et la bille 18 dans l'empreinte dudit piston.

Dans le cas où le bloc tournant 23 correspond à la broche de fraisage, le positionnement précis du pion 19 est obtenu par le capteur de broche prévu pour le changement des porte-outils de fraisage.

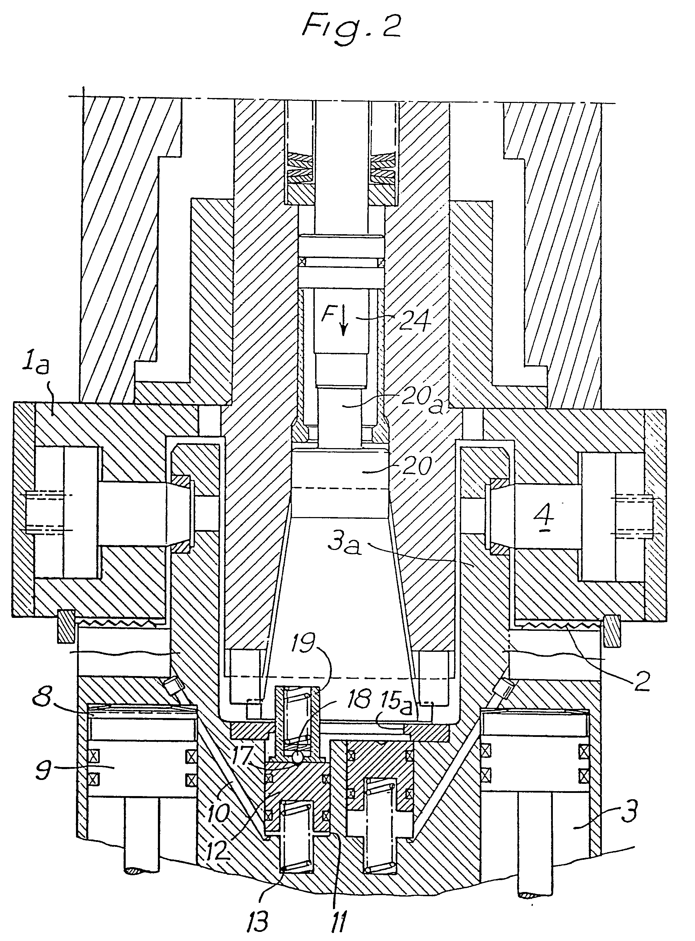

Ensuite la tige 24 (figure 2) est actionnée par un moyen de commande de la machine, de telle sorte que ladite tige se déplace dans le sens de la flèche F et repousse l'organe de transmission 20, vers le bas ainsi que le pion 19, qui repousse à son tour le piston 12 dans le cylindre 11 à l'encontre du ressort 13.

Le liquide qui est comprimé dans le cylindre 11 par le piston 12 s'écoule par le conduit 10 vers la chambre 8 et repousse le piston 9 qui assure le déblocage de la cassette-outil 6.

Lors de la remontée de l'organe de transmission 20, du pion 19 et du piston 12, le liquide s'écoule en sens inverse de la chambre 8 vers le cylindre 11 et le piston 9 reprend sa place initiale représentée à la figure 1 permettant le montage d'une nouvelle cassette-outil 6 en position de blocage.

La cassette-outil 6 n'est pas décrite plus en détail car il en existe plusieurs types qui peuvent être utilisés avec le porte-outil suivant l'invention, lesdites cassettes comportant intérieurement leurs moyens de blocage dans les logements 5.

A la figure 7 on a représenté un autre mode de réalisation dans lequel l'organe de transmission 20 est prolongé à sa partie supérieure 20a, par un collet 35 qui est maintenu serré dans les mors d'une pince 36 solidaire d'une tige 37 disposée dans un alésage de la broche 38.

## Revendications

1. Dispositif de blocage et de déblocage de cassettes-outils sur un porte-outil monté sur un coulisseau ou coulant de machine-outil, ledit porte-outil (3) étant susceptible d'être fixé sur le coulant (1), par l'intermédiaire d'un moyen de calage angulaire tel que des crantages (2) et d'un moyen de serrage (4, 3b), tandis que lesdites cassettes (6) sont disposées dans des alvéoles (5) du porte-outil (3) comportant à leur partie supérieure un premier piston (9) de commande de blocage et de déblocage de la cassette-outil (6), une broche (23) étant en outre montée tournante et immobilisée en translation dans le coulant (1), caractérisée en ce que:

- un organe de transmission (20) est prisonnier du porte-outil (3) tout en étant libre de se mouvoir en translation de course limitée et en rotation relativement à ce porte-outil (3), cet organe de transmission (20) attelé audit porte-outil étant susceptible d'être logé dans la broche (23), en étant relié à cette broche par l'intermédiaire d'un accouplement coulissant (23a, 20a),
- un moyen de commande (24) s'étendant coaxialement dans la broche (23) est disposé en regard de l'organe de transmission (20), lequel est muni d'un pion ou poussoir fixe d'actionnement (19) s'étendant parallèlement à l'axe dudit organe de transmission,
- le porte-outil fixe (3) comporte, d'une façon connue en soi, autant de circuits hydrauliques fermés de commande (8, 10, 11) que ce porte-outil est équipé de cassettes-outils 6, chaque circuit reliant le cylindre (8) du premier piston (9) au cylindre (11) d'un deuxième piston (12),
- les cylindres (11) du porte-outil débouchent en regard de l'organe de transmission (20) à la même distance de son axe que le pion ou poussoir (19) fixé audit organe, de façon que ledit poussoir puisse actionner, par translation axiale dudit organe, le deuxième piston (12) sélectionné par rotation de celui-ci.

2. Dispositif suivant la revendication 1, caractérisé en ce que l'organe de transmission (20) est constitué par une fausse queue conique dont l'extrémité libre est susceptible de venir en contact avec une tige de commande (24) montée coulissante dans la broche tournante (23) du coulant.

3. Dispositif suivant la revendication 1, caractérisé en ce que le poussoir (19) comporte une bille (18) susceptible de pénétrer, sous l'action d'un organe élastique (21), dans une empreinte (17) prévue dans la face apparente du second piston (12) sélectionné.

4. Dispositif suivant la revendication 1 ou 2, caractérisé en ce que l'organe de transmission (20) présente, en regard du porte-outil (3), des logements (25) dans lesquels sont montés coulissants des pistons d'appui (26) appliqués contre le porte-outil (3) par des organes élastiques (27), la répartition angulaire du poussoir (19) et des pistons d'appui (26) dans l'organe de transmission (20) étant différente de celle des deuxièmes pistons de commande (12) du porte-outil (3).

5. Dispositif selon la revendication 4, caractérisé en ce que le poussoir fixe (19) et les pistons coulissants d'appui (26) sont excentrés par rapport à l'axe commun de l'organe de transmission (20) et du porte-outil (3) et sont inscrits tangentiellement dans un orifice (15a) dudit porte-outil centré sur cet axe, le poussoir et les pistons présentant un rebord (32) disposé en recouvrement d'un rebord (33) de l'orifice du porte-outil de façon que ces poussoir et pistons soient prisonniers de ce porte-outil et lesdits pistons ayant une course de coulissement limitée (31, 31a).

## Patentansprüche

1. Vorrichtung zur Blockierung und Entblockierung von Werkzeugkassetten in einem auf einem Schlitten oder Werkzeugmaschinensupport montierten Werkzeugträger, welcher Werkzeugträger (3) unter Zwischenschaltung eines Winkelanstellmittels, wie Rastungen (2), und eines Klemmittels (4, 3b) auf dem Support (1) befestigbar ist, wobei die Kassetten (6) in Zellen (5) des Werkzeugträgers (3) angeordnet sind, die in ihrem oberen Teil einen ersten Kolben (9) zur Steuerung der Blockierung und Entblockierung der Werkzeugkassette (6) umfassen, wobei weiters eine Spindel (23) drehbar und verschiebesicher im Support (1) gelagert ist, dadurch gekennzeichnet, daß:

- ein Übertragungsorgan (20) um einen begrenzten Weg frei verschiebebeweglich und gegenüber dem Werkzeugträger (3) frei rotationsbeweglich im Werkzeugträger (3) eingeschlossen ist, welches Übertragungsorgan (20), das am Werkzeugträger angekuppelt ist, in die Spindel (23) einbringbar ist, indem es mittels einer Gleitkupplung (23a, 20a) mit dieser Spindel verbunden wird,

- ein sich koaxial in der Spindel (23) erstreckendes Steuermittel (24) dem Übertragungsorgan (20) gegenüberliegend angeordnet ist, welches mit einem feststehenden Betätigungsmetallstück oder -stößel (19) versehen ist, der sich parallel zur Achse des Übertragungsorgans erstreckt,
- der ortsfeste Werkzeugträger (3) auf an sich bekannte Weise so viele geschlossene Hydrauliksteuerkreise (8, 10, 11) umfaßt, wie der Werkzeugträger mit Werkzeugkassetten 6 ausgestattet ist, wobei jeder Kreis den Zylinder (8) des ersten Kolbens (9) mit dem Zylinder (11) eines zweiten Kolbens (12) verbindet,
- die Zylinder (11) des Werkzeugträgers gegenüber dem Übertragungsorgan (20) im gleichen Abstand von seiner Achse wie das am Organ befestigte Metallstück oder der Stößel (19) derart einmünden, daß der Stößel durch axiale Verschiebung des Organs den zweiten, durch Rotation desselben gewählten Kolben (12) betätigen kann.

2. Vorrichtung nach Anspruch 1 dadurch gekennzeichnet, daß das Übertragungsorgan (20) durch ein konisches Blind-Endstück gebildet ist, dessen freies Ende mit einer gleitend in der Drehspindel (23) des Supports gelagerten Steuerstange (24) in Kontakt gelangen kann.

3. Vorrichtung nach Anspruch 1 dadurch gekennzeichnet, daß der Stößel (19) eine Kugel (18) umfaßt, die unter der Wirkung eines elastischen Organs (21) in eine auf der Sichtfläche des zweiten gewählten Kolbens (12) vorgesehene Vertiefung (17) eindringen kann.

4. Vorrichtung nach Anspruch 1 oder 2, dadurch gekennzeichnet, daß das Übertragungsorgan (20) gegenüber dem Werkzeugträger (3) Sitze (25) aufweist, in denen an den Werkzeugträger (3) durch elastische Organe (27) angedrückte Stützkolben (26) gleitend gelagert sind, wobei sich die Winkelverteilung des Stößels (19) und der Stützkolben (26) im Übertragungsorgan (20) von jener der zweiten Steuerkolben (12) des Werkzeugträgers (3) unterscheidet.

5. Vorrichtung nach Anspruch 4, dadurch gekennzeichnet, daß der feststehende Stößel (19) und die gleitenden Stützkolben (26) gegenüber der gemeinsamen Achse des Übertragungsorgans (20) und des Werkzeugträgers (3) exzentrisch und tangential einer Öffnung (15a) des um diese Achse zentrierten Werkzeugträgers eingeschrieben sind, wobei der Stößel und die Kolben eine Randleiste (32) aufweisen, die eine Randleiste (33) der Öffnung des Werkzeugträgers überdeckend angeordnet ist, sodaß der Stößel und die Kolben in diesem Werkzeugträger eingeschlossen sind und die Kolben einen begrenzten Gleitweg (31, 31a) haben.

## Claims

1. Device for locking and unlocking tool cartridges on a tool-holder mounted on a ram or slider of a machine tool, said tool-holder (3) being fixable on the slider (1) by angular wedging means such as groove guideway (2) and locking means (4, 3b), while said cartridges(6) are arranged in recesses (5) in the tool-holder (3) having at their top part a first piston (9) for locking and unlocking the tool cartridge (6), a pin (23) furthermore being rotatably mounted and immobilized in translation in the slider (1), characterized in that:

- a transmission means (20) is captive of the tool holder (3) while being free to move in translation with limited travel and in rotation relative to this tool-holder (3), said transmission means (20) coupled to said tool-holder being lodgable in the pin (23) while being linked to said pin by means of a slidable mating means (23a, 20a),
- a control means (24) extending coaxially in the pin (23) is set face-to-face with the transmission means (20), which means is fitted with fixed actuating stud or plunger (19) extending parallel the axis of the transmission means,
- the fixed tool-holder (3) includes, in a manner known per se, as many closed hydraulic control circuits (8, 10, 11) as there are tool cartridges (6) fitted to the tool-holder, each circuit connecting the cylinder (8) of the first piston (9) to the cylinder (11) of a second piston (12),
- the cylinder (11) of the tool-holder opening in front of the transmission means (20) at the same distance from its axis as the stud or plunger (19) fixed to said means, such that said plunger can actuate, by axial translation of said means, the second piston (12) selected by rotation of the latter.

2. Device according to claim 1, characterized in that the transmission means (20) is formed by a conical dummy tail, the free end of which is capable of contacting a control rod (24) slidingly mounted in the rotatable pin (23) of the slider.

3. Device according to claim 1, characterized in that the plunger (19) has a ball (18) capable of penetrating, through the action of elastic means (21), inside an indent (17) provided on the apparent face of the selected second piston (12).

4. Device according to claim 1 or 2, characterized in that the transmission means (20) has beddings (25) opposite the tool-holder (3), inside which are slidably engaged propping pistons (26) bearing against the toolholder (3) by elastic means (27), the angular distribution of the plunger (19) and the propping pistons (26) in the transmission means (20) being different to that of the second control pistons (12) of the tool-holder (3).

5. Device according to claim 4, characterized in that the fixed plunger (19) and the slidable propping pistons (26) are eccentric with respect to a common axis of the transmission means (20) and the tool-holder (3), and are inserted tangentially inside an orifice (15a) of said tool-holder centered on that axis, the plunger and pistons having an edge (32) made to overlap an edge (33) of the orifice of the tool-holder so that said plunger and pistons are captive of said tool-holder and said pistons having a limited sliding travel (31, 31a).

*Fig. 1*

## Fig. 2

Fig. 3

Fig. 4

Fig. 5

*Fig. 6*

*Fig. 7*

# Fig. 8